**Europäisches Patentamt**

**European Patent Office**

**Office européen des brevets**

(19)

(11) **EP 1 287 749 A2**

(12) **EUROPÄISCHE PATENTANMELDUNG**

(43) Veröffentlichungstag:
05.03.2003 Patentblatt 2003/10

(51) Int Cl.⁷: **A23L 1/212**, A23P 1/16

(21) Anmeldenummer: 02018964.3

(22) Anmeldetag: **26.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **24.08.2001 DE 10141576**

(71) Anmelder: **Carl Kühne KG(GmbH & Co.)**
**22761 Hamburg (DE)**

(72) Erfinder:
• **Langkamp, Petra**
**20255 Hamburg (DE)**
• **Steckowski, Ulrich, Dr.**
**25469 Halstenbek (DE)**
• **Trück, Hans Uwe, Dr.**
**22880 Wedel (DE)**

(74) Vertreter: **Eisenführ, Speiser & Partner**
**Martinistrasse 24**
**28195 Bremen (DE)**

(54) **Lebensmittelkomposition mit Schaumstruktur auf Gemüsebasis**

(57) Beschrieben wird eine Lebensmittelkomposition mit Schaumstruktur, umfassend

- feinstzerkleinertes, gegebenenfalls zumindest teilweise dehydratisiertes Gemüse sowie
- zur Herstellung und/oder Stabilisierung der Schaumstruktur notwendige Zusatzstoffe.

Die Schaumstruktur ist dabei im Wesentlichen aus dem feinstzerkleinerten, gegebenenfalls zumindest teilweise dehydratisierten Gemüse und den zur Herstellung und/oder Stabilisierung der Schaumstruktur notwendigen Zusatzstoffen gebildet.

**EP 1 287 749 A2**

**Beschreibung**

Die vorliegende Erfindung betrifft primär eine (verzehrfertige) Lebensmittelkomposition mit Schaumstruktur auf Gemüsebasis. Des weiteren betrifft die Erfindung einen entsprechenden Brotaufstrich sowie die Verwendung feinst zerkleinerten Gemüses als struktureller Bestandteil einer Lebensmittelkomposition mit Schaumstruktur.

Lebensmittelkompositionen auf Gemüsebasis sind seit Jahrhunderten bekannt, jedoch keine Lebensmittelkompositionen mit einer Schaumstruktur auf Gemüsebasis, was sich sicherlich darauf zurückzuführen lässt, dass im Gemüse die zur Schaumherstellung notwendigen Bestandteile (emulgierende und/oder stabilisierende Substanzen) nicht vorhanden sind.

Die JP 0060253756 AA offenbart eine offenbar nicht aufgeschlagene Gemüsespeise, zu deren Herstellung von Gemüseblättern (z. B. Spinatblättern) ausgegangen wird. Ein Gemüseschaum wird nicht beschrieben.

Die JP 0110225701 AA offenbart eine Lebensmittelkomposition, die (A) vorgelatinierte Stärke und (B) Gemüsepulver umfasst, wobei die Komponenten A und B in kaltem Wasser ohne Rühren löslich sein sollen. Das nach dem Auflösen in kaltem Wasser resultierende Produkt bildet somit keine Schaumstruktur.

Die JP 0110164656 AA beschreibt eine Lebensmittelkomposition, die $\alpha$-Form-Stärke und Gemüsefasern umfasst. Ähnlich wie bei der vorerwähnten JP 0110225701 AA sollen diese beiden Substanzen in kaltem Wasser ohne Rühren zu einer Fertigspeise umgesetzt werden. Diese Fertigspeise besitzt dementsprechend keine Schaumstruktur.

Im Bereich der Lebensmittelindustrie und insbesondere in den Bereichen der Lebensmittelindustrie, welche sich mit Brotaufstrichen, Desserts, Puddings, Salatdressings, Salatsaucen und dgl. befassen, besteht generell ein beständiger Bedarf an neuen Lebensmittelkompositionen, die sich günstig und mit gleichbleibender Qualität herstellen lassen, auch bei längerer Lagerung ihre für den Verzehr relevanten Eigenschaften bewahren und erwünschte sensorische Eigenschaften besitzen. Gesucht werden insbesondere Lebensmittelkompositionen, die wohlschmeckend, leicht bekömmlich, kalorienarm, reich an Vitaminen und Mineralstoffen sowie bequem portionierbar sind.

Es war dementsprechend die der vorliegenden Erfindung zugrundeliegende Aufgabe, eine Lebensmittelkomposition anzugeben, die möglichst viele der vorgenannten Eigenschaften besitzt.

Erfindungsgemäß wird diese Aufgabe gelöst durch die Angabe einer (verzehrfertigen) Lebensmittelkomposition mit Schaumstruktur, umfassend

- feinstzerkleinertes, gegebenenfalls zumindest teilweise dehydratisiertes (d. h. entwässertes, z. B. also (gefrier-) getrocknetes) Gemüse sowie
- zur Herstellung und/oder Stabilisierung der Schaumstruktur notwendige Zusatzstoffe.

Überraschenderweise ließen sich die erfindungsgemäßen Lebensmittelkompositionen mit einer ausreichend stabilen Schaumstruktur erzeugen. Die erfindungsgemäßen Lebensmittelkompositionen, deren Schaumstruktur vorzugsweise im wesentlichen aus dem feinstzerkleinerten, gegebenenfalls zumindest teilweise dehydratisierten Gemüse und den zur Herstellung und/oder Stabilisierung der Schaumstruktur notwendigen Zusatzstoffen (Grenzflächenstabilisatoren, Schaumstabilisatoren) gebildet ist, vermitteln dabei ein geschmackliches Erlebnis, welches von dem Konsumenten als äußerst angenehm empfunden wird. Die erfindungsgemäßen Lebensmittelkompositionen können zudem, falls dies erwünscht ist, fettarm bzw. zumindest im wesentlichen fettfrei ausgestaltet werden, beispielsweise um besonderen diätetischen Erfordernissen zu genügen. Das Aroma der Lebensmittelkomposition kann durch das Gemüse selbst bestimmt oder durch das Vorhandensein von additiv eingesetzten Aromastoffen modifiziert sein. Je nach Wunsch können Süßungsmittel, Würzmittel, Säuerungsmittel, Konservierungsmittel, Vitamine und/oder Mineralien in die erfindungsgemäße Lebensmittelkomposition eingearbeitet sein.

Ein besonders angenehmes Mundgefühl vermitteln die erfindungsgemäßen Lebensmittelkompositionen, wenn das Verhältnis A aus der Dichte $\rho_{Schaum}$ der (erfindungsgemäßen) Lebensmittelkomposition (mit Schaumstruktur) zur Dichte $\rho_{Norm}$ einer ungeschäumten Komposition mit hinsichtlich der flüssigen und/oder festen Bestandteile gleichen Zusammensetzung gilt:

$$0,1 < A = \rho_{Schaum} / \rho_{Norm} < 0,9.$$

Vorzugsweise gilt:

$$0,2 < A = \rho_{Schaum}/\rho_{Norm} < 0,8.$$

Typischerweise wird die erfindungsgemäße Lebensmittelkomposition mit Schaumstruktur aus der entsprechenden ungeschäumten Komposition hergestellt, indem unter diese mit einem Rührgerät Luft oder ein inertes Gas geschlagen wird; alternativ wird Luft oder ein inertes Gas in die ungeschäumte Komposition eingeblasen und verteilt. Hieraus resultiert dann die Ausbildung der Schaumstruktur und eine Volumenvergrößerung bei selbstverständlich gleichbleibender Masse der Komposition; dementsprechend reduziert sich die Dichte der Komposition während des Aufschäumens (Aufschlagens).

Eine bevorzugte erfindungsgemäße Lebensmittelkomposition umfasst

- feinstzerkleinertes, gegebenenfalls zumindest teilweise dehydratisiertes Gemüse in einer solchen Menge, dass das Verhältnis aus der Masse der Trockensubstanz des Gemüses zur Gesamtmasse der Komposition im Bereich zwischen 1% und 15% liegt.

Daneben liegen dann beispielsweise weiter vor:

- 0 - 40 Gew.-%, vorzugsweise 0 - 10 Gew.-% Fett oder Öl und/oder
- 0 - 10 Gew.-%, vorzugsweise 0,5-10 Gew.-% Proteine und/oder
- 0-5 Gew.-%, vorzugsweise 0,05 - 5 Gew.-% Emulgatoren und/oder
- 0-20 Gew.-%, vorzugsweise 0,5 - 2,0 Gew.-% Hydrokolloide

wobei sich die Gewichtsprozentangaben jeweils auf die Gesamtmasse der Komposition beziehen. Zur Anhebung der Trockenmasse der Lebensmittelkomposition können zusätzliche Substanzen in einer Menge von 0-50 Gew.-% inkorporiert sein. Wie bereits erwähnt, können selbstverständlich auch Aromastoffe, Süßungsmittel (inkl. Zuckerstoffen), Würzmittel, Säuerungsmittel, Konservierungsstoffen, Vitamine und/oder Mineralien vorgesehen sein.

Der Anteil an Trockenmasse in einer erfindungsgemäßen Lebensmittelkomposition sollte im Bereich von 10 - 50 Gew.-%, vorzugsweise 20-40 Gew.-% liegen. Der flüssige Anteil (Wasser sowie ggf. Alkohol) liegt dementsprechend im Bereich von 50 - 90 Gew.-%.

Das bzw. die zur Herstellung einer erfindungsgemäßen Lebensmittelkomposition einzusetzenden Gemüse können in unterschiedlicher Form vorliegen. Beispielsweise ist die Verwendung von frischem Gemüse ebenso möglich wie die Verwendung von tiefgekühltem Gemüse oder von Gemüse aus der Konserve. Auch entwässertes oder teilentwässertes Gemüse (wie z. B. Tomatenmark, Gemüsepulver, Gemüsepaste) kann zur Herstellung einer erfindungsgemäßen Lebensmittelkomposition eingesetzt werden.

Im Rahmen des vorliegenden Textes bezeichnet der Begriff "Gemüse" dabei den essbaren Anteil einer Pflanze, wobei zur Herstellung einer erfindungsgemäßen Lebensmittelkomposition insbesondere Gemüse eingesetzt wird, das aus der Gruppe ausgewählt ist, die besteht aus: Tomate, Spargel, Paprika, Broccoli, Sellerie, Rote Bete, Karotte, Zwiebel, Meerrettich, Knoblauch, Rhabarber, Spinat, Artischocke, Kohlgemüse, Kartoffel, Hülsenfrüchte, Sojabohnen, Aubergine, Gurke, Mais und deren Mischungen.

Zur Herstellung einer erfindungsgemäßen Lebensmittelkomposition können die in der Lebensmitteltechnologie üblichen Fette oder Öle eingesetzt werden, also z. B. Pflanzenöle, hydrierte Pflanzenöle, tierische Fette, fraktionierte Fette oder Mischungen der vorgenannten Fette bzw. Öle. Wird als tierisches Fett Milchfett eingesetzt, kann es in Form von Butter, Butterreinfett, Sahne, wasserfreiem Milchfett oder einer entsprechenden Mischung vorliegen. Typische Pflanzenöle, die im Rahmen der vorliegenden Erfindung eingesetzt werden können, sind Kokosnussöl, Olivenöl, Sonnenblumenöl, Palmöl, Rapsöl, Sojaöl, Maiskeimöl, Sesamöl u. dgl. einschließlich der entsprechenden hydrierten Formen.

Als Emulgatoren (grenzflächenstabilisierende Substanzen) können in erfindungsgemäßen Lebensmittelkompositionen die in der Lebensmittelindustrie üblichen Emulgatoren eingesetzt werden. Bevorzugt sind Emulgatoren, die aus der Gruppe ausgewählt sind, die besteht aus: Lecithine, Salze von Speisefettsäuren, Mono- und Diglyceride von Speisefettsäuren, Mono- und Diglyceride von Speisefettsäuren verestert mit Genusssäuren, Speisefettsäuren sowie Mischungen der genannten Emulgatoren.

Als schaumstabilisierende Hydrokolloide können Substanzen eingesetzt werden, die z. T. auch in die Gruppe der Proteine fallen. Bevorzugte Hydrokolloide sind aus der Gruppe ausgewählt, die besteht aus: Gelatine, Alginat, Agar-Agar, Carrageene, Gummi arabicum, Xanthan, Stärke, Stärkederivate, Johannisbrotkernmehl, Guarkernmehl, Cellulose, Cellulosederivate. Andere in der Lebensmitteltechnologie üblichen Hydrokolloide können ebenfalls eingesetzt werden.

Sowohl zur Grenzflächenstabilisierung als auch zur Schaumstabilisierung können bei der Herstellung einer erfindungsgemäßen Lebensmittelkomposition zudem Proteine eingesetzt werden, die insbesondere aus der Gruppe ausgewählt sein können, die aus pflanzlichen Proteinen (wie z. B.Sojaproteinen), tierischen Proteinen (wie z. B. Milcheiweiß, Eigelb und Gelatine) und Mischungen der genannten Proteine besteht.

Als Substanz zur Anhebung der Trockenmasse einer erfindunsgemäßen Lebensmittelkomposition können beispielsweise Maltodextrin, Milchzucker, Ballaststoffe und Mischungen dieser Substanzen eingesetzt werden.

Die gegebenenfalls noch zusätzlich eingesetzten Aromastoffe, Süßungsmittel, Würzmittel, Säuerungsmittel, Vitamine, Konservierungsmittel und/oder Mineralien können ebenfalls zur Anhebung der Trockenmasse der Lebensmittelkomposition beitragen.

Das in einer erfindungsgemäßen Lebensmittelkomposition enthaltene feinstzerkleinerte, gegebenenfalls zumindest teilweise dehydratisierte Gemüse kann ganz oder teilweise durch Obst (ggf. zumindest teilweise dehydratisiert) ersetzt werden, wobei dieses wiederum beispielsweise in Form von frischem Obst, tiefgekühltem Obst, Obstpulver, getrocknetem Obst, Obstpaste oder Obst aus Konserve oder dgl. eingesetzt werden kann.

Die erfindungsgemäßen Lebensmittelkompositionen besitzen, eine hygienische Herstellung und Abfüllung vorausgesetzt, bei einer Temperatur von 2 - 8° C eine Mindesthaltbarkeitsdauer von vorzugsweise zumindest 10 Tagen. Während dieser Zeit bleibt die Schaumstruktur bevorzugter erfindungsgemäßer Lebensmittelkompositionen zumindest im wesentlichen erhalten.

Die Herstellung einer erfindungsgemäßen Lebensmittelkomposition im Labormaßstab umfasst in der Regel folgende Schritte:

- Bereitstellen feinstzerkleinerten Gemüses (gegebenenfalls teilweise oder vollständig dehydratisiert),
- Vermischen des Gemüses mit den weiteren Zutaten (siehe oben),
- Erhitzen der Komponentenmischung auf eine Temperatur im Bereich von 80° C bis 140° C,
- Rückkühlen der Komponentenmischung auf eine Temperatur im Bereich von 5° C bis 30° C,
- Aufschlagen der abgekühlten Komponentenmischung mit einem geeigneten Aufschlaggerät, bis die Komposition eine Schaumstruktur ausgebildet hat und die damit einhergehende Volumenvergrößerung (Dichtereduzierung) im gewünschten Bereich liegt (siehe dazu oben).

Die erfindungsgemäßen Lebensmittelkompositionen lassen sich insbesondere als bzw. in Brotaufstrichen, Desserts, Puddings, Toppings und dgl. einsetzen. Eine erfindungsgemäße Lebensmittelkomposition, die als Gaskomponente vorzugsweise Stickstoff umfassen kann, lässt sich so einstellen, dass sie locker, leicht, konturenhaltend (nicht fließend), nicht geliert und streichfähig ist.

Nachfolgend wird die Erfindung anhand von Beispielen näher erläutert.

Beispiel 1:

60 Gewichtsteile Karotte (frisch) und 10 Gewichtsteile Apfel (frisch) wurden feinstzerkleinert. Das feinstzerkleinerte Gemüse-Frucht-Gemisch wurde mit 10 Gewichtsteilen Sahne (Fettanteil 30%), 3,6 Gewichtsanteilen Kokosfett, 1,0 Gewichtsanteilen Salz, 1,0 Gewichtsanteilen Zucker, 2,0 Gewichtsanteilen Branntweinessig, 6,0 Gewichtsanteilen Maltodextrin, 2,0 Gewichtsanteilen Milcheiweiß (Lactalbumin), 1,8 Gewichtsanteilen Schweinegelatine, 0,2 Gewichtsanteilen Johannisbrotkernmehl, 1,2 Gewichtsanteilen Emulgator (E 472b, E 471) und 1,2 Gewichtsanteilen Wasser vermischt. Vgl. hierzu auch die nachfolgende Tabelle 1.

Die erhaltene (Roh-)Mischung wurde für ca. 1 Minute auf eine Temperatur von ca. 120°C erhitzt. Im Anschluss erfolgte eine Rückkühlung auf eine Aufschlagtemperatur von ca. 10°C. Mit einer kontinuierlichen Aufschlagmaschine wurde die (Roh-)Mischung anschließend bei einem Produktvolumenstrom von 50 l/h, einer Mixkopfdrehzahl von 500 U/min und einem Gasvolumenstrom von 0,6 Nl/min. (Nl=Normliter) aufgeschlagen. Das Dichteverhältnis $\rho_{Schaum}/\rho_{Norm}$ betrug 0,65.

Die Lebensmittelkomposition wurde nach 24stündiger Lagerung (8°C) sensorisch beurteilt. Sie wies eine gute und lockere Schaumstruktur auf. Das Mundgefühl wurde als sehr angenehm beschrieben.

Die Schaumstruktur erwies sich bei Kühllagerung (Temperatur 8°C) als stabil.

Beispiel 2:

Verfahrensgestaltung wie bei Beispiel 1, jedoch wurden als Gemüse 60 Gewichtsanteile Rote Bete (vorgekocht) und 10 Gewichtsanteile Gemüsemeerrettich eingesetzt und auf die Zugabe von Sahne verzichtet. Stattdessen wurde der Wasseranteil auf 11,2 Gewichtsteile erhöht. Der Fettgehalt der Lebensmittelkomposition gemäß Beispiel 2 ist somit niedriger als der gemäß Beispiel 1.

Die Resultate hinsichtlich Textur, Mundgefühl und Aufschlag entsprechen jedoch denen aus Beispiel 1.

Die Rezepturen gemäß den Beispielen 1 und 2 sind in der nachfolgenden Tabelle 1 zusammengefasst.

Tabelle 1

|  | Beispiel 1 | Beispiel 2 |
|---|---|---|
| Karotte, frisch | 60,0 % | -- |

Tabelle 1   (fortgesetzt)

| | Beispiel 1 | Beispiel 2 |
|---|---|---|
| Apfel, frisch | 10,0 % | -- |
| Rote Bete, vorgekocht | -- | 60,0 % |
| Gemüsemeerrettich | -- | 10,0 % |
| Sahne (30 %) | 10,0 % | -- |
| Kokosfett | 3,6 % | 3,6 % |
| Salz | 1,0 % | 1,0 % |
| Zucker | 1,0 % | 1,0 % |
| Branntweinessig (10%) | 2,0 % | 2,0 % |
| Maltodextrin | 6,0 % | 6,0 % |
| Milcheiweiß (Lactalbumin) | 2,0 % | 2,0 % |
| Schweinegelatine (240 Bloom) | 1,8 % | 1,8 % |
| Johannisbrotkernmehl | 0,2 % | 0,2 % |
| Emulgatoren (E 472b, E 471) | 1,2 % | 1,2 % |
| Wasser | 1,2 % | 11,2 % |
| Summe | 100,0 % | 100,0 % |

**Patentansprüche**

1. Lebensmittelkomposition mit Schaumstruktur, umfassend

   - feinstzerkleinertes, gegebenenfalls zumindest teilweise dehydratisiertes Gemüse sowie
   - zur Herstellung und/oder Stabilisierung der Schaumstruktur notwendige Zusatzstoffe.

2. Lebensmittelkomposition nach Anspruch1, wobei die Schaumstruktur im wesentlichen aus dem feinstzerkleinerten, gegebenenfalls zumindest teilweise dehydratisierten Gemüse und den zur Herstellung und/oder Stabilisierung der Schaumstruktur notwendigen Zusatzstoffen gebildet ist.

3. Lebensmittelkomposition nach einem der vorangehenden Ansprüche, wobei für das Verhältnis A aus der Dichte $\rho_{Schaum}$ der Lebensmittelkomposition mit Schaumstruktur zur Dichte $\rho_{norm}$ einer ungeschäumten Komposition mit hinsichtlich der flüssigen und/oder festen Bestandteile gleichen Zusammensetzung gilt:

$$0,1 < A = \rho_{Schaum} / \rho_{norm} < 0,9.$$

4. Lebensmittelkomposition nach einem der vorangehenden Ansprüche, umfassend:

   - feinstzerkleinertes, gegebenenfalls zumindest teilweise dehydratisiertes Gemüse in einer solchen Menge, dass das Verhältnis aus der Masse der Trockensubstanz des Gemüses zur Gesamtmasse der Komposition im Bereich zwischen 1% und 15% liegt.

5. Lebensmittelkomposition nach einem der vorangehenden Ansprüche, weiter umfassend:

   - 0 - 40 Gew.-%, vorzugsweise 0 - 10 Gew.-% Fett oder Öl
   - 0 - 10 Gew.-%, vorzugsweise 0,5 - 10 Gew.-% Proteine
   - 0-5 Gew.-%, vorzugsweise 0,05 - 5 Gew.-% Emulgatoren
   - 0-20 Gew.-%, vorzugsweise 0,5 - 2,0 Gew.-% Hydrokolloide,

wobei die Gew.-%-Angabe auf die Gesamtmasse der Komposition bezogen ist,
sowie gegebenenfalls Substanzen zur Anhebung der Trockenmasse der Lebensmittelkomposition,
sowie gegebenenfalls Aromastoffe, Süßungsmittel, Würzmittel, Säuerungsmittel, Konservierungsstoffe, Vitamine
und/oder Mineralien.

6. Lebensmittelkomposition nach einem der vorangehenden Ansprüche, mit einer Trockenmasse im Bereich von 10
   - 50 Gew.-%, vorzugsweise 20 - 40 Gew.-%.

7. Lebensmittelkomposition nach einem der vorhergehenden Ansprüche, wobei das Gemüse ganz oder teilweise
   durch Obst ersetzt ist.

8. Brotaufstrich, umfassend eine Lebensmittelkomposition nach einem der vorangehenden Ansprüche.

9. Verwendung eines feinstzerkleinerten, gegebenenfalls zumindest teilweise dehydratisierten Gemüses als struktureller Bestandteil einer Lebensmittelkomposition mit Schaumstruktur.